# FASCICULE DE BREVET EUROPEEN

(11) **EP 1 188 468 B1**
(45) Date de publication et mention de la délivrance du brevet: **27.05.2009**
(21) Numéro de dépôt: 01402330.3
(22) Date de dépôt: 10.09.2001
(51) Int. Cl.: B01D 35/18, B01D 29/11, B01D 29/60, B01D 36/00

(54) **Filtre à gazole incluant un circuit électrique et dispositif de filtration comportant un tel filtre**
Flüssigkeitsfilter für Dieselkraftstoff mit einem elektrischen Stromkreis und Filtervorrichtung mit solchem Filter
Gas-oil filter comprising an electrical circuit and filtering device with such a filter

(30) Priorité: 14.09.2000 FR 0011719
(43) Date de publication de la demande: 20.03.2002
(73) Titulaire: FILTRAUTO, 78180 Montigny le Bretonneux (FR)
(72) Inventeur: Ben Amor, Noureddine, 91860 Epinay sous Senart (FR); Fremont, Laurent, 28410 BU (FR)
(74) Mandataire: Burbaud, Eric

(56) Documents cités:
- EP-A- 0 657 199
- EP-A- 0 984 157
- EP-A- 1 101 519
- FR-A- 2 597 694
- US-A- 4 406 785
- US-A- 4 680 110

## Description

La présente invention est relative aux filtres à gazole incluant des circuits électriques et aux dispositifs de filtration comportant de tels filtres.

Plus particulièrement, l'invention concerne un filtre à gazole comprenant un boîtier qui délimite un volume intérieur comportant, d'une part, une zone d'amont communiquant avec une entrée de gazole, et d'autre part, une zone d'aval séparée de la zone d'amont par un élément filtrant et communiquant avec une sortie de gazole, la zone d'amont comprenant en outre un circuit électrique qui comporte au moins un composant électrique adapté pour interagir avec du liquide contenu dans le boîtier.

Le document US-A-4 680 110 décrit un exemple d'un tel filtre à gazole, dans lequel les composants électriques de la zone d'amont comprennent un élément chauffant électrique, un capteur de température et un capteur d'eau qui sont portés par le fond du boîtier du filtre. Le montage de ces composants électriques sur le fond du filtre est relativement complexe, d'autant que ce fond assure également une fonction de fermeture du boîtier du filtre. Il en résulte un filtre à gazole relativement coûteux.

Les documents EP 0657199 A2, FR 2597694 et EP 1 101 519 décrivent des moyens de chauffage comportant des composants électriques pour le chauffage du gazole d'un dispositif de filtration.

La présente invention a notamment pour but de pallier ces inconvénients.

A cet effet, selon l'invention, un filtre à gazole du genre en question est **caractérisé en ce que** le circuit électrique de la zone d'amont se présente sous la forme d'une plaque de circuit imprimé qui porte ledit composant électrique, ladite plaque de circuit imprimé étant entièrement contenue dans la zone d'amont du volume intérieur du boîtier.

Grâce à ces dispositions, le circuit électrique de la zone d'amont peut être réalisé à faible coût par des moyens classiques fonctionnant à grande cadence. De plus, la mise en place du circuit électrique dans la zone d'amont est particulièrement simple, puisqu'il suffit de fixer la plaque de circuit imprimé dans cette chambre et de la raccorder à un connecteur externe.

Dans des modes de réalisation préférés de l'invention, on peut éventuellement avoir recours en outre à l'une et/ou à l'autre des dispositions suivantes :
- la plaque de circuit imprimé porte à la fois un élément chauffant électrique, un capteur thermique et un détecteur d'eau qui s'étend vers le bas jusqu'à une zone de collecte d'eau ;
- ledit composant électrique est soudé sur la plaque de circuit imprimé ;
- le boîtier du filtre comporte un connecteur externe qui comprend des broches traversant avec étanchéité le boîtier du filtre et s'étendant jusqu'à des extrémités intérieures situées dans le volume intérieur dudit boîtier, la plaque de circuit imprimé comportant par ailleurs des broches complémentaires qui coopèrent par emboîtement avec les extrémités intérieures des broches du connecteur externe pour raccorder électriquement le circuit électrique de la zone d'amont avec ledit connecteur externe ;
- le boîtier du filtre présent une paroi annulaire disposée autour d'un axe central, la plaque de circuit imprimé s'étendant perpendiculairement audit axe central au-dessous de l'élément filtrant et au-dessus d'une plaque de séparation également perpendiculaire audit axe central, le volume intérieur du boîtier présentant une chambre de collecte d'eau située au-dessous de la plaque de séparation et communiquant avec la zone d'amont à travers ladite plaque, la plaque de circuit imprimé subdivisant de façon non étanche la zone d'amont en un volume inférieur qui communique directement avec l'entrée de gazole et un volume supérieur qui est en contact avec l'élément filtrant, et ledit composant électrique porté par la plaque de circuit imprimé étant disposé dans ledit volume inférieur de la zone d'amont;
- l'élément filtrant présente une forme annulaire et délimite intérieurement la zone d'aval, qui communique avec un puits central ménagé dans le boîtier du filtre, la plaque de circuit imprimé étant disposée autour de ce puits central.

Par ailleurs, l'invention a également pour objet un dispositif de filtration comportant:
- un filtre tel que défini ci-dessus, dans lequel la plaque de circuit imprimé porte au moins un capteur thermique et un élément chauffant électrique,
- et une unité centrale électronique externe au filtre et raccordée électriquement à la plaque de circuit imprimé du filtre, cette unité centrale électronique étant adaptée pour contrôler une puissance électrique délivrée à l'élément chauffant en fonction d'une température mesurée par le capteur thermique.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est un schéma de principe d'un dispositif de filtration selon une forme de réalisation de l'invention,
- les figures 2 et 3 sont des vues en perspective, selon deux angles de vue différents, d'un filtre à gazole appartenant au dispositif de filtration schématisé sur la figure 1,
- et la figure 4 est une vue en coupe verticale du filtre des figures 2 et 3.

Sur les différentes figures, les mêmes références désignent des éléments identiques ou similaires.

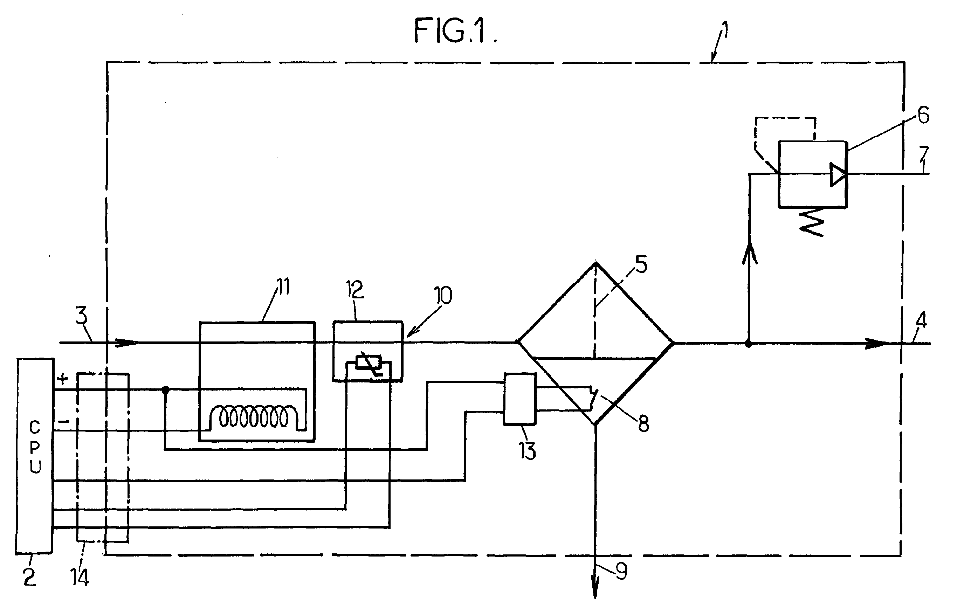

La figure 1 représente schématiquement un dispositif de filtration pour véhicule automobile à moteur diesel, comportant, d'une part, un filtre à gazole 1 et, d'autre part, une unité centrale électronique 2 (CPU) dotée d'interfaces adaptées, laquelle unité centrale peut être constituée notamment par le calculateur de bord du véhicule, ou autre.

Le filtre à gazole 1 comporte une entrée de gazole 3 et une sortie de gazole 4 séparée par un élément filtrant 5 en papier filtre ou similaire. La pression de gazole au niveau de la sortie 4 est régulée grâce à un régulateur de pression 6 tel qu'une soupape de décharge ou similaire qui, en cas de surpression, peut s'ouvrir et permettre à une partie du gazole sortant de l'élément filtrant 5 de s'écouler dans une dérivation 7 vers le réservoir de carburant du véhicule.

Le filtre 1 comprend par ailleurs une chambre de collecte d'eau 8 qui communique avec un dispositif de purge 9, connu en soi.

Enfin, le filtre 1 comprend, dans la zone située en amont de l'élément filtrant 5, un circuit électrique 10 qui, dans l'exemple considéré, inclut :
- au moins un élément chauffant électrique 11 en contact avec le flux de gazole entrant dans le filtre 1,
- au moins un capteur thermique 12 tel qu'un thermocouple, thermistance ou autre, en contact direct avec le flux de gazole entrant dans le filtre 1,
- et un détecteur d'eau 13 adapté pour détecter un certain niveau d'eau dans la chambre de collecte d'eau 8.

Le circuit électrique est raccordé à l'unité centrale électronique 2 par l'intermédiaire d'un collecteur 14.

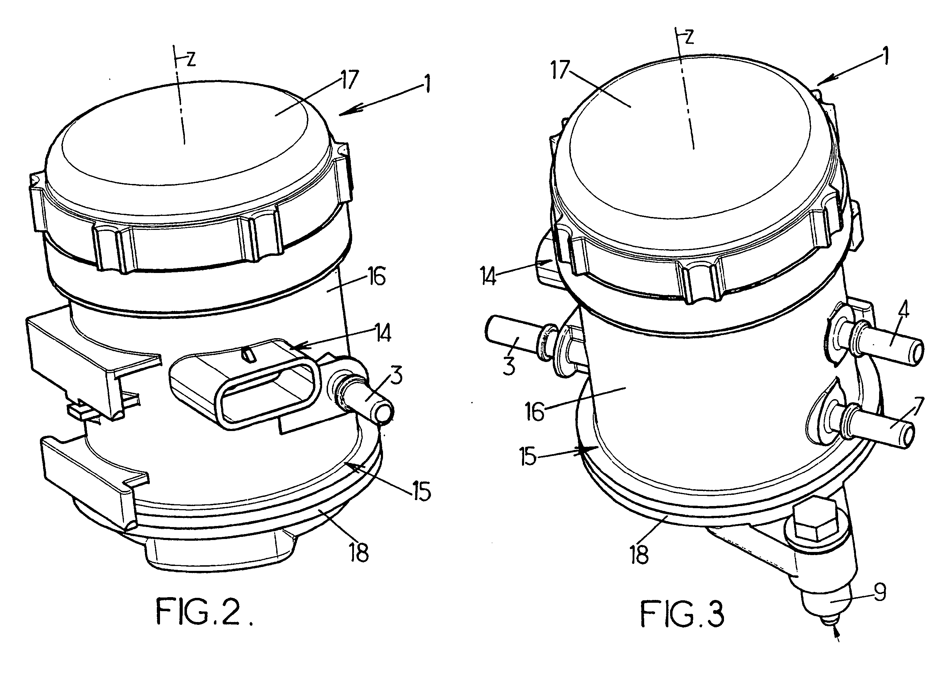

Comme représenté sur les figures 1 à 4, le boîtier 15 du filtre 1 peut présenter par exemple une forme sensiblement cylindrique de révolution autour d'un axe central Z.

Ce boîtier 15, qui peut être réalisé par exemple en matière plastique, peut comporter :
- une paroi latérale 16 cylindrique de révolution autour de l'axe Z, qui s'étend entre des extrémités axiales ouvertes, respectivement supérieure et inférieure, la paroi latérale 16 incluant l'entrée et la sortie de gazole 3, 4, le passage de dérivation 7 et le collecteur 14,
- un couvercle 17 qui est fixé par vissage ou autre à l'extrémité supérieure ouverte de la paroi latérale 13 et qui est de préférence amovible pour permettre le remplacement de l'élément filtrant 5,
- et un fond 18 qui est fixé par des vis ou par soudure notamment ultrasons à l'extrémité inférieure de la paroi latérale 16, ce fond 18 comportant la purge 9 susmentionnée.

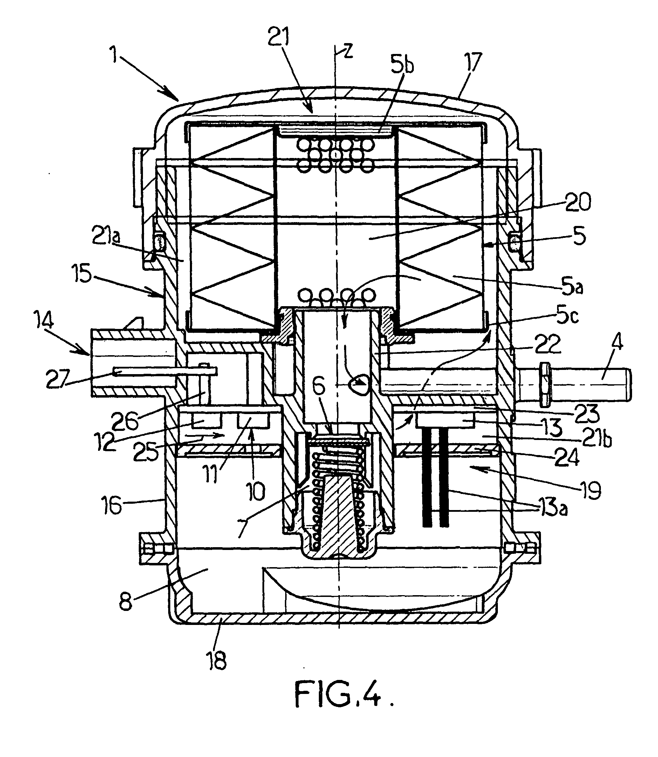

Comme représenté sur la figure 4, le boîtier 15 du filtre délimite un espace intérieur creux 19 en partie supérieure duquel est disposé l'élément filtrant 5, qui présente une forme cylindrique de révolution autour de l'axe Z.

La paroi annulaire filtrante 5a de l'élément filtrant 5 délimite intérieurement une chambre d'aval 20 qui recueille le gazole filtré. L'extrémité supérieure de l'élément filtrant 5 est entièrement recouverte par un flasque supérieur 5b qui isole la chambre d'aval 20 d'avec une chambre d'amont 21 communiquant avec l'entrée de gazole 3.

Par ailleurs, l'extrémité inférieure de l'élément filtrant est dotée d'un flasque étanche annulaire 5c qui s'emboîte avec étanchéité sur un embout tubulaire 22 ouvert vers le haut qui appartient au boîtier 15 et forme un puits vertical centré sur l'axe Z et communiquant avec la sortie de gazole 4. Ce puits vertical 22 se prolonge vers le bas par une partie inférieure à l'intérieur de laquelle est disposé le régulateur de pression 6 qui communique lui-même avec la dérivation 7 susmentionnée.

Par ailleurs, la chambre d'amont 21 reçoit une plaque de circuit imprimé 23 disposée autour du puits 22 dans un plan perpendiculaire à l'axe Z immédiatement au-dessous du niveau de la sortie 4 de gazole et immédiatement au-dessus du niveau de l'entrée 3 de gazole.

Cette plaque de circuit imprimé, qui est fixée à l'intérieur de la paroi latérale 16 du boîtier par emboîtement à force, clipsage, ou autre, sépare de façon non étanche la chambre d'amont 21 en :
- un volume supérieur 21a qui entoure directement l'élément filtrant 5,
- et un volume intérieur 21b qui est disposé au-dessous de la plaque de circuit imprimé 23 et qui communique directement avec l'entrée de gazole 3 pour recevoir le flux de gazole 25 entrant dans le filtre.

De plus, le volume inférieur 21b de la chambre d'amont est séparé de la chambre de collecte d'eau 8 par une paroi horizontale 24 réalisée par exemple en matière plastique et emboîtée à force ou fixée autrement à l'intérieur de la paroi latérale 16 du boîtier au-dessous de la plaque 23 de circuit imprimé.

Les plaques 23 et 24 comportent l'une et l'autre des trous, des fentes ou passages permettant une communication entre, d'une part, le volume inférieur 21b de la chambre d'amont et la chambre de collecte d'eau 8, et d'autre part, les volumes inférieur 21b et supérieur 21a de la chambre d'amont.

Par ailleurs la face inférieure de la plaque 23 de circuit imprimé porte les composants électriques 11, 12, 13 du circuit électrique 10 susmentionné de façon que le capteur thermique 12 et l'élément chauffant 11 soient directement léchés par le flux de gazole 25 dès son entrée dans le filtre.

Avantageusement, l'élément chauffant 11 peut comporter une résistance à coefficient de température positif (CTP) ou être associé à une telle résistance, de façon à éviter toute surchauffe du gazole à l'entrée dans le filtre.

Par ailleurs, le détecteur d'eau 13 peut comporter par exemple deux électrodes 13a qui s'étendent vers le bas jusque dans la chambre de collecte d'eau en traversant la plaque de séparation 24 : de façon connue en soi, tant que les deux électrodes 13a sont entièrement immergées dans le gazole, elles sont sensiblement isolées électriquement l'une de l'autre compte tenu du caractère isolant du gazole, mais dès que le niveau d'eau dans la chambre 8 atteint les extrémités inférieures de ces électrodes, la résistance électrique entre lesdites deux électrodes chute brutalement, ce qui est détecté par l'unité centrale électronique 2 reliée au détecteur 13.

Enfin, la plaque de circuit imprimé 23 comporte des broches verticales métalliques 26 qui s'étendent vers le haut à partir de la face supérieure de la plaque 23 et qui sont emboîtées (notamment par clipsage) aux extrémités intérieures de broches horizontales 27 appartenant au connecteur 14 et traversant la paroi latérale 16 du boîtier avec étanchéité.

Ainsi, les informations provenant du capteur thermique 12 et du détecteur d'eau 13 peuvent être lues par l'unité centrale électronique 2.

Cette unité centrale 2 peut par exemple générer une alarme (voyant lumineux ou autre) lorsque le détecteur 13 détecte un niveau d'eau suffisamment haut dans la chambre de collecte d'eau 8.

De plus, lorsque le capteur thermique 12 mesure une température de gazole insuffisante, susceptible de générer des particules solides dans le gazole et risquant ainsi de colmater l'élément filtrant 5, l'unité centrale 2 fait fonctionner l'élément chauffant 11 et pilote la puissance électrique dissipée par cet élément chauffant en fonction de la température mesurée par le capteur 12.

En revanche, lorsque le capteur 12 mesure une température de gazole supérieure à un seuil prédéterminé, l'unité centrale 2 coupe l'alimentation de l'élément chauffant 11. Le circuit 10 consomme alors une faible intensité électrique, par exemple de l'ordre de 25mA, contre 1 à 2A pour les circuits de réchauffage de gazole les plus courants.

## Revendications

1. Filtre à gazole comprenant un boîtier (15) qui délimite un volume intérieur (19) comportant, d'une part, une zone d'amont (21) communiquant avec une entrée de gazole (3), et d'autre part, une zone d'aval (20) séparée de la zone d'amont (21) par un élément filtrant (5) et communiquant avec une sortie de gazole (4), la zone d'amont comprenant en outre un circuit électrique (10) qui comporte au moins un composant électrique (11, 12, 13) adapté pour interagir avec du liquide contenu dans le boîtier, le boîtier (15) comprenant une première partie (16, 18) et une deuxième partie fixées entre elles, la première partie formant un logement dans lequel est disposé l'élément filtrant (5) et la deuxième partie formant un couvercle (17),
**caractérisé en ce que** le circuit électrique (10) de la zone d'amont se présente sous la forme d'une plaque de circuit imprimé (23) qui porte ledit composant électrique (11, 12, 13), ladite plaque de circuit imprimé étant fixée sur la première partie (16, 18) du boîtier et entièrement contenue dans la zone d'amont (21) du volume intérieur du boîtier.

2. Filtre à gazole selon la revendication 1, dans lequel le boîtier (15) est doté d'un fond (18) et la plaque de circuit imprimé (23) est disposée entre l'élément filtrant (5) et ledit fond (18).

3. Filtre à gazole selon la revendication 1 ou 2, dans lequel ledit composant électrique est choisi parmi un élément chauffant (11) et un capteur thermique (12), ce composant électrique étant disposé pour être en contact thermique avec du gazole (25) entrant dans ladite zone d'amont par l'entrée de gazole (3).

4. Filtre à gazole selon la revendication 3, dans lequel la plaque de circuit imprimé (23) porte à la fois un élément chauffant électrique (11), un capteur thermique (12) et un détecteur d'eau (13) qui s'étend vers le bas jusqu'à une zone de collecte d'eau (8).

5. Filtre à gazole selon l'une quelconque des revendications précédentes, dans lequel ledit composant électrique (11, 12) est soudé sur la plaque de circuit imprimé (23).

6. Filtre à gazole selon l'une quelconque des revendications précédentes, dans lequel le boîtier (15) du filtre comporte un connecteur externe (14) qui comprend des broches (27) traversant avec étanchéité le boîtier du filtre et s'étendant jusqu'à des extrémités intérieures situées dans le volume intérieur (19) dudit boîtier, la plaque de circuit imprimé (23) comportant par ailleurs des broches complémentaires (26) qui coopèrent par emboîtement avec les extrémités intérieures des broches (27) du connecteur externe pour raccorder électriquement le circuit électrique (10) de la zone d'amont avec ledit connecteur externe.

7. Filtre à gazole selon l'une quelconque des revendications précédentes, dans lequel le boîtier (15) du filtre présente une paroi annulaire (16) disposée autour d'un axe central (Z), la plaque de circuit imprimé (23) s'étendant perpendiculairement audit axe central au-dessous de l'élément filtrant (5) et au-dessus d'une plaque de séparation (24) également perpendiculaire audit axe central, le volume intérieur (19) du boîtier présentant une chambre de collecte d'eau (8) située au-dessous de la plaque de séparation (24) et communiquant avec la zone d'amont (21) à travers ladite plaque, la plaque de circuit imprimé (23) subdivisant de façon non étanche la zone d'amont (21) en un volume inférieur (21b) qui communique directement avec l'entrée de gazole (3) et un volume supérieur (21a) qui est en contact avec l'élément filtrant (5), et ledit composant électrique (11, 12, 13) porté par la plaque de circuit imprimé étant disposé dans ledit volume inférieur (21b) de la zone d'amont.

8. Filtre à gazole selon l'une quelconque des revendications précédentes, dans lequel l'élément filtrant (5) présente une forme annulaire et délimite intérieurement la zone d'aval (20), qui communique avec un puits central (22) ménagé dans le boîtier (15) du filtre, la plaque de circuit imprimé (23) étant disposée autour de ce puits central (23).

9. Dispositif de filtration comportant:
- un filtre (1) selon l'une quelconque des revendications précédentes, dans lequel la plaque de circuit imprimé (23) porte au moins un capteur thermique (12) et un élément chauffant électrique (11),
- et une unité centrale électronique (2) externe au filtre et raccordée électriquement à la plaque de circuit imprimé (23) du filtre, cette unité centrale électronique étant adaptée pour contrôler une puissance électrique délivrée à l'élément chauffant (11) en fonction d'une température mesurée par le capteur thermique (12).

## Claims

1. Gas oil filter comprising a casing (15) which defines an internal space (19) comprising on the one hand an upstream zone (21) communicating with a gas oil inlet (3) and on the other hand a downstream zone (20) separated from the upstream zone (21) by a filtering element (5) and communicating with a gas oil outlet (4), the upstream zone further comprising an electrical circuit (10) which has at least one electrical component (11, 12, 13) adapted to interact with liquid contained in the casing, the casing (15) comprising a first part (16, 18) and a second part which are fixed to each other, the first part forming a housing in which the filtering element (5) is disposed and the second part forming a cover (17),
**characterised in that** the electrical circuit (10) of the upstream zone is in the form of a printed circuit board (23) that supports the said electrical component (11, 12, 13), the said printed circuit board being fixed to the first part (16, 18) of the casing and entirely contained within the upstream zone (21) of the internal space of the casing.

2. Gas oil filter as claimed in claim 1, wherein the casing (15) is provided with a base (18) and the printed circuit hoard (23) is disposed between the filtering element (5) and the said base (18).

3. Gas oil filter as claimed in claim 1 or 2, wherein the said electrical component is selected from among a heating element (11) and a thermal sensor (12), this electrical component being disposed so as to be in thermal contact with gas oil (25) entering the said upstream zone by the gas oil inlet (3).

4. Gas oil filter as claimed in claim 3, wherein the printed circuit board (23) supports an electrical heating element (11), thermal sensor (12) and also a water detector (13) which extends downwards as far as a water-collecting zone (8).

5. Gas oil filter as claimed in any one of the preceding claims, wherein the said electrical component (11, 12) is soldered to the printed circuit board (23).

6. Gas oil filter as claimed in any one of the preceding claims, wherein the casing (15) of the filter has an external connector (14) which has pins (27) passing in in scaled manner through the casing of the filter and expending as far as internal ends located within the internal space (19) of the said casing, the printed circuit board (23) further having complementary pins (26) which cooperate by fitting together with the internal ends of the pins (27) of the external connector in order electrically to connect the electrical circuit (10) of the upstream zone to the said external connector.

7. Gas oil filter as claimed in any one of the preceding claims, wherein the casing (15) of the filter has an annular wall (16) disposed around a central axis (Z), the printed circuit board (23) extending perpendicular to the said central axis below the filtering element (5) and above a separating plate (24) also perpendicular to the said central axis, the internal space (19) of the casing having a water-collecting chamber (8) located below the separating plate (24) and communicating with the upstream zone (21) through the said plate, the printed circuit board (23) subdividing the upstream zone (21) in a non-sealed manner into a lower space (21 b) which communicates directly with the gas oil inlet (3) and an upper space (21a) which is in contact with the filtering element (5), and the said electrical component (11, 12, 13) supported by the printed circuit board being disposed in the said lower space (21b) of the upstream zone.

8. Gas oil filter as claimed in any one of the preceding claims, wherein the filtering element (5) is of an annular shape and internally defines the downstream zone (20) which communicates with a central well (22) provided in the casing (15) of the filter, the printed circuit board (23) being disposed around this central well (22).

9. Filtration device comprising:
- a filter (1) as claimed in any one of the preceding claims, wherein the printed circuit board (23) has at least one thermal sensor (12) and an electrical heating element (11),
- and a central electronic unit (2) external to the filter and electrically connected to the printed circuit board (23) of the filter, this central electronic unit being adapted to control electrical power delivered to the heating element (11) according to a temperature measured by the thermal sensor (12).

## Patentansprüche

1. Dieselfilter, umfassend ein Gehäuse (15), das ein inneres Volumen (19) begrenzt, welches auf einer Seite einen stromaufwärtigen Bereich (21) umfasst, der mit einem Dieseleinlass (3) In Verbindung steht, und auf der anderen Seite, einen stromabwärtigen Bereich (20), der von dem stromaufwärtigen Bereich (21) durch ein Filterelement (5) getrennt ist, und der mit einem Dieselauslass (4) in Verbindung steht, wobei der stromaufwärtige Bereich ferner eine elektrische Schaltung (10) umfasst, die wenigstens eine elektrische Komponente (11, 12, 13) umfasst, welche dazu angepasst ist, mit Flüssigkeit zu wechselwirken, die In dem Gehäuse enthalten ist,
wobei das Gehäuse (15) einen ersten Abschnitt (16, 18) und einen zweiten Abschnitt umfasst, die aneinander befestigt sind, wobei der erste Abschnitt eine Unterbringung bildet, in welcher das Filterelement (5) aufgenommen ist, und wobei der zweite Abschnitt einen Deckel (17) bildet,
**dadurch gekennzeichnet, dass** die elektrische Schaltung (10) des stromaufwärtigen Bereichs sich in der Form einer Leiterplatte (23) darstellt, welche die elektrische Komponente (11, 12, 13) trägt, wobei die Leiterplatte an dem ersten Abschnitt (16, 18) des Gehäuses befestigt Ist und vollständig In dem stromaufwärtigen Bereich (21) des inneren Volumens des Gehäuses enthalten ist.

2. Dieselfilter nach Anspruch 1,
wobei das Gehäuse (15) mit einem Boden (18) ausgestattet ist, und die Leiterplatte (23) zwischen dem Filterelement (5) und dem Boden (18) angeordnet ist.

3. Dieselfilter nach Anspruch 1 oder 2,
wobei die elektrische Komponente ausgewählt ist aus einem Heizelement (11) und einem Thermosensor (12), wobei die elektrische Komponente so angeordnet ist, dass sie in thermischem Kontakt mit Diesel (25) steht, der in den stromaufwärtigen Bereich durch den Dieseleinlass (3) hereinströmt.

4. Dieselfilter nach Anspruch 3,
wobei die Leiterplatte (23) zugleich ein elektrisches Heizelement (11), einen Thermosensor (12) und einen Wasserdetektor (13) trägt, welcher sich nach unten bis In einen Bereich zum Sammeln von Wasser (8) erstreckt.

5. Dieselfilter nach einem der vorhergehenden Ansprüche,
wobei die elektrische Komponente (11, 12) auf die Leiterplatte (23) gelötet ist.

6. Dieselfilter nach einem der vorhergehenden Ansprüche,
wobei das Gehäuse (15) des Filters einen externen Anschluss (14) umfasst, der Stifte (27) umfasst, welche abgedichtet das Gehäuse des Filters durchqueren und die sich bis zu inneren Enden erstrecken, die sich in dem inneren Volumen (19) des Gehäuses befinden, wobei die Leiterplatte (23) außerdem komplementäre Stifte (26) umfasst, die durch Ineinanderstecken mit den inneren Enden der Stifte (27) des externen Anschlusses zusammenwirken, um die elektrische Schaltung (10) des stromaufwärtigen Bereichs mit dem externen Anschluss elektrisch zu verbinden.

7. Dieselfilter nach einem der vorhergehenden Ansprüche,
wobei das Gehäuse (15) des Filters eine ringförmige Wand (16) aufweist, die um eine zentrale Achse (Z) angeordnet ist, wobei die Leiterplatte (23) sich senkrecht zu der zentralen Achse unterhalb des Filterelements (5) erstreckt und oberhalb einer Trennplatte (24) ebenfalls senkrecht zur zentralen Achse, wobei das innere Volumen (19) des Gehäuses eine Kammer zum Sammeln von Wasser (8) aufweist, die unterhalb der Trennplatte (24) gelegen ist und mit dem stromaufwärtigen Bereich (21) über diese Platte in Verbindung steht, wobei die Leiterplatte (23) auf nicht abgedichtete Weise den stromaufwärtigen Bereich (21) in ein tieferliegendes Volumen (21 b), das direkt mit dem Dieseleinlass (3) in Verbindung steht, und in ein höherliegendes Volumen (21a) tellt, das in Kontakt mit dem Filterelement (5) steht, und wobei die von der Leiterplatte getragene elektrische Komponente (11, 12, 13) in dem tieferliegenden Volumen (21b) des stromaufwärtigen Bereichs angeordnet ist.

8. Dieselfilter nach einem der vorhergehenden Ansprüche,
wobei das Filterelement (5) eine Ringform aufweist und Innen den stromabwärtigen Bereich (20) begrenzt, der mit einem zentralen Schacht (22) in Verbindung steht, der in dem Gehäuse (15) des Filters ausgespart ist, wobei die Leiterplatte (23) um diesen zentralen Schacht (22) herum angeordnet ist.

9. Filtereinrichtung, umfassend:
- einen Filter (1) nach einem der vorhergehenden Ansprüche, wobei die Leiterplatte (23) wenigstens einen Thermosensor (12) und ein elektrisches Heizelement (11) trägt,
- und eine elektronische Zentraleinheit (2) außerhalb des Filters und elektrisch mit der Leiterplatte (23) des Filters verbunden, wobei die elektronische Zentraleinheit dazu angepasst ist, eine elektrische Leistung, die dem Heizelement (11) zugeführt wird, in Funktion einer von dem Thermosensor (12) gemessenen Temperatur zu steuern/zu regeln.
